(19) Europäisches Patentamt
European Patent Office
Office européen des brevets

(11) **EP 0 632 388 B1**

(12) **FASCICULE DE BREVET EUROPEEN**

(45) Date de publication et mention
de la délivrance du brevet:
**22.12.1999 Bulletin 1999/51**

(51) Int Cl.⁶: **G06F 12/04**, G06F 13/40,
H04N 7/24

(21) Numéro de dépôt: **94410044.5**

(22) Date de dépôt: **27.06.1994**

(54) **Système à processeur, notamment de traitement d'image comprenant un bus mémoire de taille variable**

Prozessorsystem, insbesondere für Bildverarbeitung mit einem Speicherbus von variabler Grösse

Processor system particularly for image processing comprising a variable size memory bus

(84) Etats contractants désignés:
**DE FR GB IT**

(30) Priorité: **30.06.1993 FR 9308218**

(43) Date de publication de la demande:
**04.01.1995 Bulletin 1995/01**

(73) Titulaire: **STMicroelectronics S.A.**
**94250 Gentilly (FR)**

(72) Inventeur: **Artieri, Alain**
**F-38240 Meylan (FR)**

(74) Mandataire: **de Beaumont, Michel**
**1bis, rue Champollion**
**38000 Grenoble (FR)**

(56) Documents cités:
**EP-A- 0 189 523** **EP-A- 0 522 835**

- **ELEKTRONIK vol. 41, no. 23 , 9 Novembre 1992 , MUNCHEN DE pages 72 - 75 QUEROL 'MPEG/H261-Videodecoder mit wenigen Chips'**
- **MICROPROCESSORS AND MICROSYSTEMS vol. 3, no. 10 , Décembre 1979 , LONDON GB pages 435 - 441 WHITWORTH 'Designing flexibility into memory systems'**
- **PATENT ABSTRACTS OF JAPAN vol. 16, no. 368 (P-1398)7 Août 1992 & JP-A-04 114 246 (HITACHI) 15 Avril 1992**
- **ELECTRONIC DESIGN vol. 41, no. 9 , 3 Mai 1993 , HASBROUCK HEIGHTS, NEW JERSEY US pages 117 - 120 BURSKY 'Image-processsing chip set handles full-motion video'**

EP 0 632 388 B1

## Description

La présente invention concerne de façon générale les systèmes à processeur communiquant avec une mémoire dynamique de taille variable.

La présente invention concerne plus particulièrement un système de traitement d'image comprenant un processeur qui gère les transferts de données entre différentes zones mémoire ainsi qu'entre les zones mémoire et une entrée et une sortie du système.

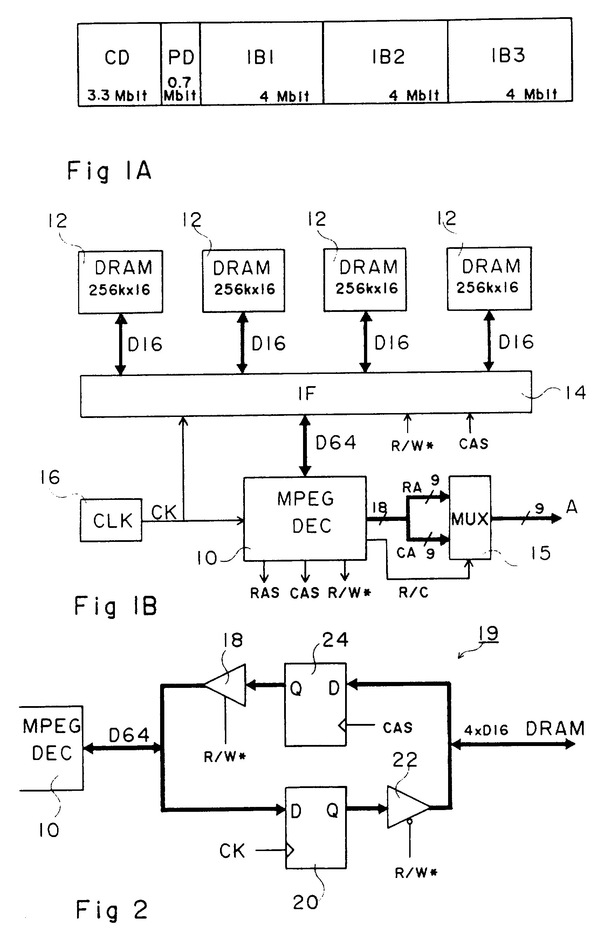

La figure 1A représente un exemple d'organisation de mémoire utilisée pour décoder des images de 720x480 pixels selon une norme MPEG. La taille de cette mémoire est de 16 mégabits. Des zones mémoire IB1 à IB3 de 4 Mbits sont des tampons d'image et contiennent chacune des données correspondant à une image décodée.

Les 4 Mbits restants comprennent une zone CD d'environ 3,3 Mbits contenant des données d'image comprimées (codées) et une zone PD d'environ 0,7 Mbit contenant des données dites privées qui n'interviennent pas dans le décodage mais qui sont utilisées pour des fonctionnalités d'agrément du décodeur, par exemple, pour superposer des informations sur l'image couramment affichée sur un écran.

Selon les normes MPEG, il est nécessaire de prévoir trois tampons d'image IB1 à IB3. En effet, il existe trois types de décodage, dits "intra", "prédit" et "interpolé".

Selon le décodage intra, des données codées provenant de la zone CD correspondent directement à une image qui est stockée dans l'un des tampons IB1 à IB3.

Selon le décodage prédit, des données codées CD correspondent à une partie d'image qui doit être combinée avec une partie d'une image précédemment décodée ; ainsi, il faut un tampon d'image pour contenir l'image précédemment décodée et un tampon pour contenir l'image couramment décodée.

Selon le décodage interpolé, des données codées CD correspondent à une partie d'image qui doit être combinée avec deux parties d'image cherchées respectivement dans deux images précédemment décodées ; il faut donc deux tampons pour stocker les deux images précédemment décodées et un tampon pour stocker l'image couramment décodée.

Chacun des décodages prédit ou interpolé est de type progressif ou entrelacé. Selon le type progressif, on vient chercher une seule partie d'image dans une image précédemment décodée, cette partie d'image correspondant à une succession de lignes paires et impaires. Selon le type entrelacé, on vient chercher deux parties d'image dans une même image précédemment décodée, l'une des parties correspondant à des lignes paires, et l'autre à des lignes impaires.

Le décodage prédit est en outre de type direct (forward) ou rétrograde (backward). Selon le type direct, une partie d'image est cherchée dans une image qui précède, dans l'ordre d'affichage, l'image couramment décodée. Selon le type rétrograde, une partie d'image est cherchée dans une image qui succède, dans l'ordre d'affichage, à l'image couramment décodée. Ceci implique que les images codées arrivent dans un ordre différent de celui d'affichage. De plus, outre le tampon contenant l'image couramment décodée, il faut deux tampons supplémentaires pour stocker respectivement une image pour une prédiction directe et une image pour une prédiction rétrograde.

La figure 1B représente très schématiquement un exemple d'architecture classique de décodeur MPEG, au niveau de la liaison d'un circuit de décodage ou processeur 10 avec une mémoire. La mémoire est généralement une mémoire dynamique (DRAM) qui présente l'avantage d'être peu coûteuse et peu encombrante. La mémoire dynamique d'un système de décodage MPEG est décomposée en quatre blocs 12, chacun ayant une capacité de 256 kmots de 16 bits (4 Mbits). Chaque bloc 12 est relié à une interface 14 par un bus de données D16 de 16 bits. L'interface 14 est reliée au circuit de décodage MPEG 10 par un bus de données D64 de 64 bits, couramment appelé "bus système". Ainsi, la mémoire du système est configurée pour contenir 256 kmots de 64 bits.

Pour accéder à 256 kmots, on utilise un bus d'adresses de 18 bits. Une mémoire dynamique est organisée en plusieurs zones appelées pages. Pour accéder à un mot d'une mémoire dynamique, on effectue un premier cycle d'adressage couramment appelé cycle RAS (Row Address Strobe) servant à sélectionner l'une des pages, puis on effectue un deuxième cycle d'adressage couramment appelé cycle CAS (Column Address Strobe) servant à sélectionner un mot dans la page. En fait, dans l'exemple représenté, on fournit à la mémoire dynamique une adresse A de 9 bits qui, pendant un cycle RAS, sont les 9 bits de poids fort RA de l'adresse RA+CA émise par le processeur 10 et, pendant un cycle CAS, sont les 9 bits de poids faible CA de cette même adresse. Un multiplexeur 15 commandé par un signal R/C fourni par le circuit 10 sélectionne les bits de poids fort RA ou les bits de poids faible CA à fournir en tant qu'adresse A à la mémoire dynamique.

Pour indiquer à la mémoire dynamique que l'on effectue un cycle d'adressage RAS ou un cycle d'adressage CAS, le processeur 10 active un signal RAS ou un signal CAS respectivement. En outre, le circuit 10 fournit un signal R/W* sélectionnant la mémoire en lecture ou en écriture.

L'ensemble des circuits est cadencé par un signal d'horloge CK fourni par un générateur d'horloge (CLK) 16.

La figure 2 représente un mode de réalisation d'interface mémoire 14 classique. Le bus D64 est relié à la sortie d'un ensemble de portes trois états 18 et à l'entrée d'un ensemble de bascules 20. Les portes trois états 18 sont commandées par le signal R/W* et les bascules 20 sont commandées par le signal d'horloge CK. Les 4 bus D16, juxtaposés, sont reliés à la sortie d'un ensemble de portes trois états 22 et à l'entrée d'un ensemble de bascules 24. Les portes trois états 22 sont commandées par l'inverse du signal R/W* et reçoivent les sorties des bascules 20. Les bascules 24 sont commandées par le signal CAS et leurs sorties sont reliées aux portes trois états 18.

Des explications supplémentaires sur la manière de réaliser une interface entre une mémoire dynamique et un circuit quelconque peuvent être trouvées dans toute note d'application de mémoire dynamique.

Dans un système de décodage MPEG complet, il faut, comme on l'a précédemment indiqué, au moins trois tampons d'image. Un système de codage/décodage MPEG complet fournit un taux de compression élevé de manière que l'on puisse transmettre les données codées avec une fréquence compatible avec la voie hertzienne. Dans la télévision câblée, la fréquence tolérée est plus élevée et il n'est pas nécessaire d'avoir des taux de compression aussi élevés. Ainsi, on peut prévoir, pour les transmissions câblées, un système de codage/décodage MPEG n'utilisant que le codage intra et le codage prédit direct. Le décodeur d'un tel système ne nécessite que deux tampons d'image. On économiserait ainsi 4 Mbits de mémoire.

Toutefois, dans un système tel que celui de la figure 1B, les blocs 12 sont des composants standards dont la capacité de 256 kmots est la valeur standard minimale. Ainsi, si l'on veut diminuer la taille de la mémoire, on est obligé de supprimer un ou plusieurs blocs 12, ce qui a pour conséquence de réduire la taille du bus mémoire. La modification de la taille du bus mémoire entraine qu'il faut modifier l'architecture du décodeur MPEG, notamment de divers éléments périphériques connectés au bus système D64, qui échangent des données avec la mémoire.

Un objet général de la présente invention est de prévoir un système à processeur pouvant être adapté à un bus mémoire de taille variable, sans qu'il soit nécessaire de modifier l'architecture d'éléments périphériques connectés pour échanger des données avec la mémoire.

Un autre objet de la présente invention est de prévoir un décodeur MPEG pouvant fonctionner avec une mémoire de capacité donnée ou avec une mémoire de capacité moitié, qui soit réalisé de manière peu complexe à partir d'un décodeur MPEG classique.

Pour atteindre ces objets, la présente invention, telle que revendiquée dans la revendication 1, prévoit un système à processeur comprenant un bus de données de taille fixe de N bits relié à une mémoire de mots de n bits par un bus d'une taille de n bits, où N est un multiple de n et où n est variable. Le système comprend des moyens pour, à chaque exécution par le processeur d'une instruction d'écriture d'un mot de N bits dans la mémoire, écrire successivement chaque sous-mot de n bits constituant ce mot de N bits à des adresses distinctes et des moyens pour, à chaque exécution d'une instruction de lecture d'un mot de N bits dans la mémoire, lire successivement dans ladite mémoire à des adresses distinctes des sous-mots de n bits, et juxtaposer ces sous-mots sur le bus de taille fixe.

Selon un mode de réalisation de la présente invention, le système comprend des moyens pour verrouiller chaque instruction de lecture ou d'écriture dans le processeur pendant (N/n)-1 cycles d'instruction, de manière qu'une même instruction de lecture ou d'écriture soit exécutée N/n fois.

Selon un mode de réalisation de la présente invention, lesdits moyens pour verrouiller comprennent des moyens pour inhiber l'incrémentation d'un pointeur d'instruction du processeur.

Selon un mode de réalisation de la présente invention, lesdits moyens pour verrouiller comprennent des moyens pour inhiber la fourniture d'un signal d'horloge au processeur.

Selon un mode de réalisation de la présente invention, le système comprend des moyens pour multiplier par N/n les adresses mémoire fournies par le processeur et incrémenter ou décrémenter celles-ci à chaque exécution d'une même instruction de lecture ou d'écriture.

Selon un mode de réalisation de la présente invention, le système comprend des dispositifs connectés pour recevoir des données de N bits sur le bus de taille fixe par l'activation de signaux de validation respectifs dont chacun est normalement activé à chaque exécution d'une instruction de lecture. Des moyens sont prévus pour autoriser l'activation desdits signaux de validation seulement à l'exécution de la dernière des N/n mêmes instructions de lecture.

Selon un mode de réalisation de la présente invention, le système comprend des dispositifs connectés pour écrire des données de N bits sur le bus de taille fixe par l'activation de signaux de validation respectifs dont chacun est normalement activé à chaque exécution d'une instruction d'écriture. Des moyens sont prévus pour autoriser l'activation desdits signaux de validation seulement à l'exécution de la première des N/n mêmes instructions d'écriture.

Selon un mode de réalisation de la présente invention, le système comprend des moyens de repliement d'adresse, de manière que les adresses reçues par ladite mémoire soient comprises dans une zone prédéterminée si les adresses émises par le processeur sont supérieures à la borne supérieure de ladite zone.

Selon un mode de réalisation de la présente invention, le système est un système de décodage d'images codées selon une norme MPEG et ladite zone mémoire stocke les images décodées. Cette zone mémoire présente une taille inférieure à celle de deux images à afficher, des moyens étant prévus pour arrêter le décodage avant que des données décodées ne viennent être écrites par dessus des données correspondant à une portion d'image non encore affichée.

Ces objets, caractéristiques et avantages ainsi que d'autres de la présente invention seront exposés en détail dans la description suivante de modes de réalisation particuliers faite en relation avec les figures jointes parmi lesquelles :

les figures 1A et 1B, précédemment décrites, représentent une organisation classique de mémoire de décodeur MPEG et une liaison classique entre la mémoire et un bus système ;

la figure 2 représente un exemple détaillé classique d'une interface entre un bus système et un bus mémoire ;

la figure 3 représente un exemple d'organisation de mémoire d'un décodeur MPEG selon la présente invention ;

la figure 4A illustre un décodage prédit avec une organisation mémoire classique ;

la figure 4B illustre un décodage prédit avec une organisation mémoire selon la présente invention ;

la figure 5 représente très schématiquement un mode de réalisation d'architecture de décodeur MPEG selon l'invention ;

la figure 6 représente un mode de réalisation détaillé d'un circuit d'interface entre un bus système et un bus mémoire selon l'invention ;

les figures 7A et 7B représentent des cycles d'écriture et lecture de données sur un bus mémoire de taille réduite selon l'invention ;

les figures 8A et 8B représentent des modes de réalisation d'un circuit de repliement d'adresses et d'un circuit de contrôle du remplissage de la mémoire dans une architecture selon l'invention ;

la figure 9A représente un mode de réalisation de circuit d'assistance fournissant divers signaux nécessaires à une architecture selon l'invention et, partiellement, un exemple d'architecture de processeur modifié selon l'invention ;

la figure 9B représente partiellement un autre exemple d'architecture de processeur modifié selon l'invention ;

les figures 10A et 10B représentent un autre mode de réalisation de circuit d'interface selon l'invention, adapté à un bus mémoire pouvant avoir quatre tailles différentes ;

la figure 11 représente un autre mode de réalisation de circuit d'assistance selon l'invention ; et

la figure 12 représente un autre mode de réalisation de circuit de repliement d'adresses selon l'invention.

La présente invention sera décrite dans le cadre d'un système de codage/décodage MPEG incomplet, c'est-à-dire qui n'utilise que le codage intra et le codage prédit direct. L'homme du métier notera que l'invention s'applique aussi à un système de codage/décodage complet, mais traitant des images de taille moitié.

Un système incomplet présente un taux de compression moindre qu'un système complet, mais il reste compatible avec la transmission de données codées par câble. Comme on l'a précédemment indiqué, le décodeur d'un tel système ne nécessite que deux tampons d'image.

La présente invention propose une architecture de décodeur pouvant servir à la fois dans un système de codage/ décodage MPEG complet et dans un système de codage/décodage incomplet comprenant deux fois moins de mémoire que le système complet, et ceci sans qu'il soit nécessaire de modifier l'architecture d'éléments périphériques connectés au bus système. Dans une telle architecture, il se présente un double problème à résoudre.

Premièrement, la réduction de moitié de la mémoire entraîne, comme on l'a précédemment indiqué, la réduction de moitié de la taille du bus mémoire. Ceci entraîne, si l'on veut continuer à échanger des données entre la mémoire et les autres éléments du décodeur, qu'il faut modifier l'architecture de ces éléments. Pour éviter cela, l'invention propose de conserver un bus système de taille fixe et de réaliser une interface particulière, décrite ultérieurement, entre le bus système et un bus mémoire de taille variable.

Deuxièmement, la réduction de moitié de la taille de la mémoire ne laisse théoriquement pas assez de place pour contenir deux tampons d'image et des données comprimées.

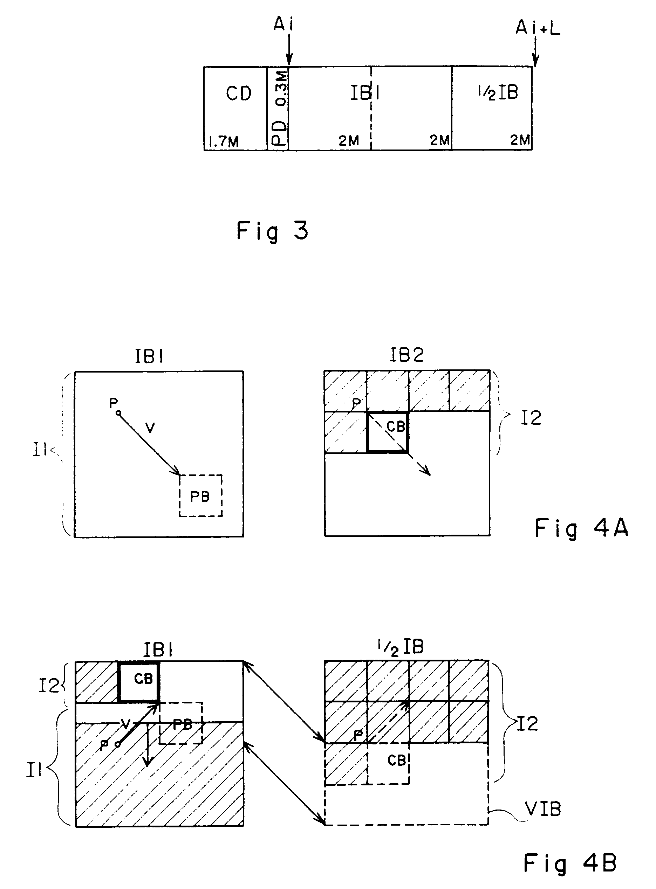

La figure 3 représente un exemple d'organisation mémoire de taille moitié selon l'invention. Cette mémoire comprend un tampon d'image IB1 de 4 Mbits commençant à une adresse Ai et un demi tampon d'image ½IB de 2 Mbits finissant à une adresse Ai+L. Il reste 1,75 Mbits d'espace pour des données codées CD et 0,25 Mbit pour les données privées PD. La norme MPEG 2 préconise que le nombre de données codées à stocker ne dépasse pas 1,75 Mbits.

Un aspect d'un décodeur MPEG selon la présente invention est d'utiliser moins de 2 tampons d'image (1,5 dans le présent exemple) là où il en faudrait classiquement 2. On décrit ci-dessous comment on procède selon l'invention pour n'utiliser que 1,5 tampons d'image.

La figure 4A illustre un décodage prédit classique utilisant deux tampons d'image IB1 et IB2. Le tampon IB1 contient tient une image I1 précédemment décodée et le tampon IB2 une image I2 couramment décodée. Dans le tampon IB2, on a représenté par une zone hachurée la partie d'image I2 qui a été décodée.

Le décodage d'une image est effectué bloc par bloc, chaque bloc correspondant généralement à des carrés d'image de 16x16 pixels. Dans le tampon IB2, on a représenté en trait gras un bloc CB en cours de décodage. Si ce bloc CB provient d'un décodage prédit, il est reconstruit à partir d'un bloc prédicteur PB cherché dans l'image précédente I1. Pour trouver ce bloc prédicteur PB, les données servant au décodage du bloc CB fournissent un vecteur V qui définit la position du bloc prédicteur PB par rapport à la position P du bloc CB dans l'image.

La figure 4B illustre un décodage prédit dans une mémoire organisée selon la présente invention. Le tampon IB1 contient initialement une image I1 précédemment décodée qui est en train de s'afficher. Cette image I1 s'affiche ligne par ligne. On a représenté à la partie basse du tampon IB1, par une zone hachurée, la portion de l'image I1 qui n'a pas encore été affichée.

Le demi tampon ½IB est entièrement rempli d'une image I2 en cours de reconstruction. Ce demi tampon ½IB est agrandi par une zone virtuelle en pointillés VIB de manière que la somme de cette zone virtuelle et du demi tampon ½IB corresponde à un tampon d'image complet. Comme cela est représenté, le bloc CB en cours de reconstruction de l'image I2 se trouve dans la zone virtuelle VIB. En fait, par un mécanisme de repliement d'adresses qui sera décrit ultérieurement, la zone virtuelle VIB est mappée dans la première moitié du tampon d'image IB1. Ainsi, le bloc courant réel CB de l'image I2 se trouve, comme cela est représenté en trait gras, dans la première moitié du tampon IB1.

Ainsi, une première condition au bon fonctionnement avec une telle organisation mémoire est que la zone du tampon IB1 où sont écrits les blocs CB de l'image I2 corresponde à une zone déjà affichée de l'image I1, comme cela est représenté. Pour cela, il est prévu un mécanisme, décrit ultérieurement, destiné à inhiber le décodage lorsque l'image en cours de décodage (I2) atteint une zone non encore affichée de l'image en cours d'affichage (I1). Ce mécanisme est possible car le temps de décodage d'une image est, en moyenne, strictement inférieur au temps d'affichage d'une image.

Une deuxième condition au bon fonctionnement, est que les zones du tampon IB1 occupées par l'image I2 en cours de reconstruction ne correspondent pas à des blocs prédicteurs à chercher dans l'image I1 précédemment décodée, puisque ces blocs prédicteurs seraient écrasés par les blocs de l'image I2. Comme cela est représenté, la position d'un éventuel bloc prédicteur PB servant à la reconstruction du bloc courant CB est déterminée par un vecteur V qui a pour origine, dans l'image I1, la position P correspondant à la position du bloc virtuel CB dans l'image I2. On constate que si la hauteur du vecteur V peut atteindre celle d'une demi-image moins celle d'un bloc, on risque de chercher dans l'image I1 un bloc prédicteur qui a été écrasé. Or, en pratique, la hauteur du vecteur V est limitée à une valeur bien inférieure à la hauteur d'une demi-image. En particulier, la norme MPEG 2 limite la hauteur du vecteur V à 128 pixels dans le cadre d'un système de codage/décodage incomplet, alors que la hauteur d'une demi-image est de 240 pixels, par exemple. Il n'y a donc aucun risque de venir chercher un bloc prédicteur écrasé par l'image en cours de reconstruction.

En général, on remarquera que cette deuxième condition est toujours satisfaite si le tampon ½IB est de taille suffisante pour contenir Hv+16 lignes d'image, où 16 est la hauteur d'un bloc et Hv la hauteur maximale du vecteur V. Ainsi, dans l'exemple d'images de 720x480 pixels et d'un vecteur V de hauteur maximale de 128 pixels, il suffit, en fait, d'un tampon ½IB de 0,3 image.

Lorsque l'image I2 aura été reconstruite et que l'image I1 aura été affichée, le début de l'image I2 se trouvera dans le tampon ½IB et la fin de l'image I2 dans la première moitié du tampon IB1. Une image reconstruite ultérieure viendra d'abord remplir la deuxième moitié du tampon IB1 puis le tampon ½IB de la même manière que la deuxième moitié de l'image I2 venait remplir la première moitié du tampon IB1...

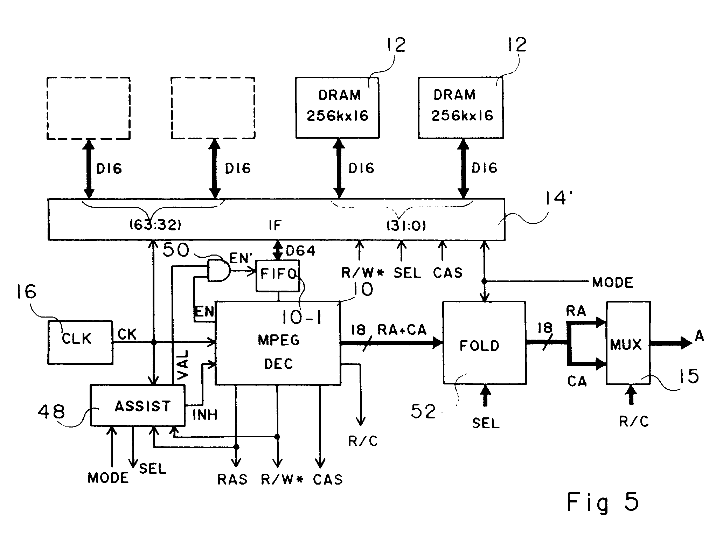

La figure 5 représente très schématiquement une architecture de décodeur MPEG à bus mémoire de taille variable selon la présente invention. Des mêmes éléments qu'à la figure 1B sont désignés par des mêmes références. Les deux bus mémoire D16 de poids le plus faible sont reliés à des blocs mémoire 12. Les deux bus D16 de poids le plus fort ne sont pas reliés à des mémoires. L'état d'une ligne MODE indique au décodeur si les deux bus D16 de poids fort sont munis de mémoire ou non. Le circuit d'interface avec la mémoire, ici noté 14' et décrit ultérieurement, est modifié par rapport à celui de la figure 1B pour, en fonction de l'état de la ligne MODE, aiguiller les 64 lignes du bus D64 sur celles des 4 bus D16 ou bien seulement sur celles des 2 bus D16 de poids faible. Pour cela, l'interface 14' reçoit également un signal de sélection SEL fourni par un circuit d'assistance 48. Ce circuit 48 reçoit la ligne MODE, les signaux CK, RAS, R/W*, et fournit en outre des signaux VAL et INH dont les rôles sont décrits ultérieurement.

Comme cela est représenté, le bus D64 est relié à des mémoires tampons de type premier-entré/premier-sorti (FIFO) 10-1 faisant classiquement partie du circuit de décodage 10. Plusieurs de ces mémoires FIFO sont accessibles en écriture par le bus D64, les autres étant accessibles en lecture. Dans le système classique de la figure 1B, chaque mémoire FIFO est validée par un signal EN au moment où elle doit présenter des données sur le bus D64 ou bien y lire des données. Dans la figure 5, chaque mémoire FIFO est validée par un signal EN' fourni par la sortie d'une porte ET 50 qui reçoit le signal EN susmentionné et le signal VAL fourni par le circuit d'assistance 48.

Les adresses RA+CA générées par le processeur 10 sont fournies au multiplexeur 15 par l'intermédiaire d'un circuit de repliement d'adresses (FOLD) 52, décrit en détail ultérieurement. Le circuit 52 reçoit également la ligne MODE.

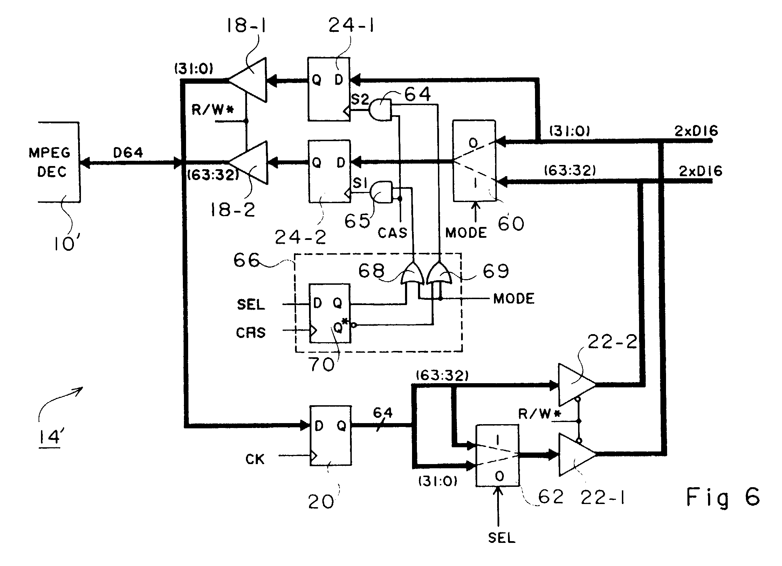

La figure 6 représente un exemple détaillé de circuit d'interface 14' selon l'invention. Des mêmes éléments qu'à la figure 2 sont désignés par des mêmes références. Les ensembles des portes trois états 18 et 22 ainsi que l'ensemble de bascules 24 de la figure 2 ont été divisés chacun en deux sous-ensembles, les premiers 18-1, 22-1, 24-1 affectés aux bits de poids faible (0:31) du bus D64, et les deuxièmes 18-2, 22-2, 24-2 affectés aux bits de poids fort (32:63) du bus D64. Les bascules 24-1 reçoivent directement les lignes des deux bus D16 de poids faible. Les lignes de ces deux bus D16 de poids faible sont également fournies à une entrée d'un multiplexeur 60 dont une autre entrée reçoit les lignes des deux bus D16 de poids fort. Le multiplexeur 60 est commandé par la ligne MODE et sa sortie est fournie aux bascules 24-2. Les portes trois états 22-2 reçoivent directement les lignes de poids fort (32:63) de sortie des bascules 20. Un multiplexeur 62 reçoit sur une entrée les lignes de poids fort de sortie des bascules 20 et sur une autre entrée les lignes de poids faible de sortie des bascules 20. Le multiplexeur 62 est commandé par le signal SEL mentionné en relation avec la figure 5, et sa sortie est fournie aux portes trois états 22-1.

Le signal CAS est fourni aux entrées de validation des bascules 24-1 et 24-2 par l'intermédiaire de portes ET respectives 64 et 65 recevant en outre chacune une sortie d'un décodeur 66. Le décodeur 66 prend en compte la ligne MODE, et les signaux SEL et CAS. Il comprend des portes OU 68 et 69 reliées respectivement aux portes ET 65 et 64 et qui reçoivent sur une première entrée la ligne MODE. Une deuxième entrée de la porte OU 68 reçoit la sortie non-inversée d'une bascule à transparence contrôlée (latch) 70. La sortie inversée de la bascule 70 est fournie à une deuxième entrée de la porte 69. L'entrée de validation de la bascule 70 reçoit le signal CAS et l'entrée de données de cette bascule reçoit le signal SEL.

Le fonctionnement d'un système selon l'invention lorsque l'on utilise un bus mémoire de taille moitié (les deux bus D16 de poids faible seulement) est en résumé le suivant.

Avantageusement, que l'on utilise un bus mémoire de taille normale ou un bus mémoire de taille moitié, le programme exécuté par le processeur qui gère les transferts de données est le même dans les deux cas.

Avec une taille moitié du bus mémoire, on exécute deux fois chaque instruction de lecture ou d'écriture d'une donnée en mémoire, cette instruction étant exécutée normalement une fois avec un bus mémoire complet. On décrira ultérieurement comment réaliser une telle double exécution d'une instruction.

A chacune des deux exécutions d'une même instruction de lecture ou écriture, la même adresse RA+CA est forcément présentée à l'entrée du circuit de repliement 52. L'un des rôles du circuit de repliement 52 est d'assurer que des adresses A distinctes soient fournies à la mémoire à chacune des deux exécutions de l'instruction, par exemple en multipliant l'adresse RA+CA par 2 et en y ajoutant un bit de poids faible différent à chacune des deux exécutions de l'instruction. Ainsi, à chacune des deux exécutions d'une même instruction de lecture ou d'écriture, on accède à des emplacements mémoire différents.

Si l'instruction que l'on exécute deux fois est une instruction d'écriture dans la mémoire, la donnée à écrire est verrouillée sur le bus D64 pendant les deux exécutions. A la première exécution, le multiplexeur 62 aiguille (par un signal SEL adéquat) les 32 bits de poids fort, par exemple, du bus D64 sur les deux bus D16 de poids faible. Ainsi, les bits de poids fort de la donnée à écrire sont écrits à une première adresse. A la deuxième exécution, le multiplexeur 62 aiguille les 32 bits de poids faible du bus D64 sur les deux bus D16 de poids faible. Ainsi, les poids faibles de la donnée à écrire sont écrits à une deuxième adresse distincte de la première. Bien entendu, on évite qu'une nouvelle donnée soit présentée sur le bus D64 à la deuxième exécution. Ceci est déterminé par le signal VAL qui empêche une deuxième validation des mémoires FIFO pendant la deuxième exécution.

Lorsque l'instruction à exécuter deux fois est une instruction de lecture, on effectue les opérations inverses de celles qui viennent d'être décrites. A chacune des deux exécutions, le circuit de repliement 52 présente des adresses différentes sur le bus d'adresses A, de manière qu'à la première exécution, on lise dans la mémoire des bits de poids fort d'une donnée à transmettre sur le bus D64 et qu'à la deuxième exécution, on lise les bits de poids faible de cette même donnée. Grâce au multiplexeur 60 et à une commande adéquate des bascules 24-1 et 24-2, les bits de poids fort de la donnée lue sont présentés sur les lignes de poids fort du bus D64 lors de la première exécution, et les bits de poids faible de la donnée lue sont présentés sur les lignes de poids faible du bus D64 lors de la deuxième exécution. Bien entendu, une mémoire FIFO ne doit prendre en compte les données sur le bus D64 qu'à la deuxième exécution, ce qui est également déterminé par le signal VAL qui empêche, par un état inactif, la validation des mémoires FIFO à la première exécution.

Lorsque le bus mémoire est de taille normale, la ligne MODE agit sur les différents circuits de l'interface de la figure 6 de manière que l'interface soit équivalente à celle de la figure 2. Le signal VAL susmentionné est alors toujours actif et les mémoires FIFO sont validées à chaque exécution d'une instruction de lecture ou d'écriture. En outre, le circuit de repliement 52 laisse alors passer les adresses RA+CA sans les modifier.

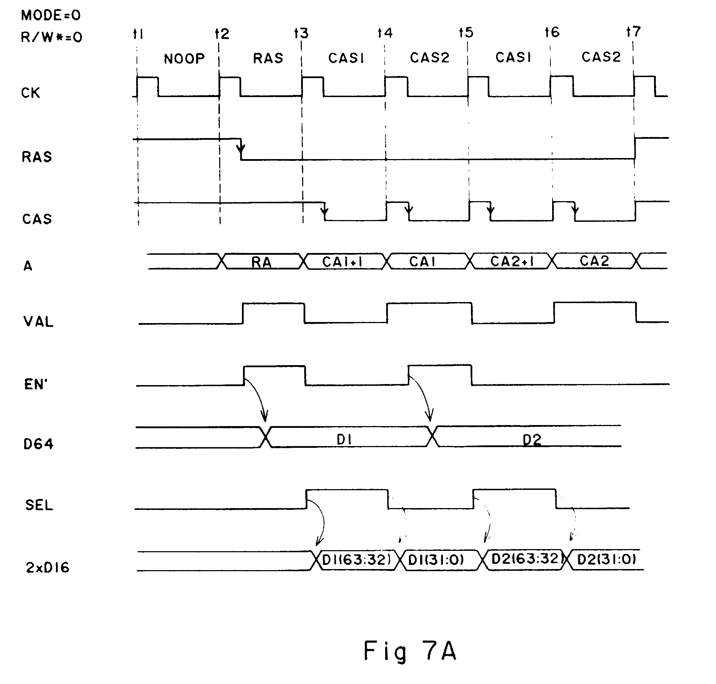

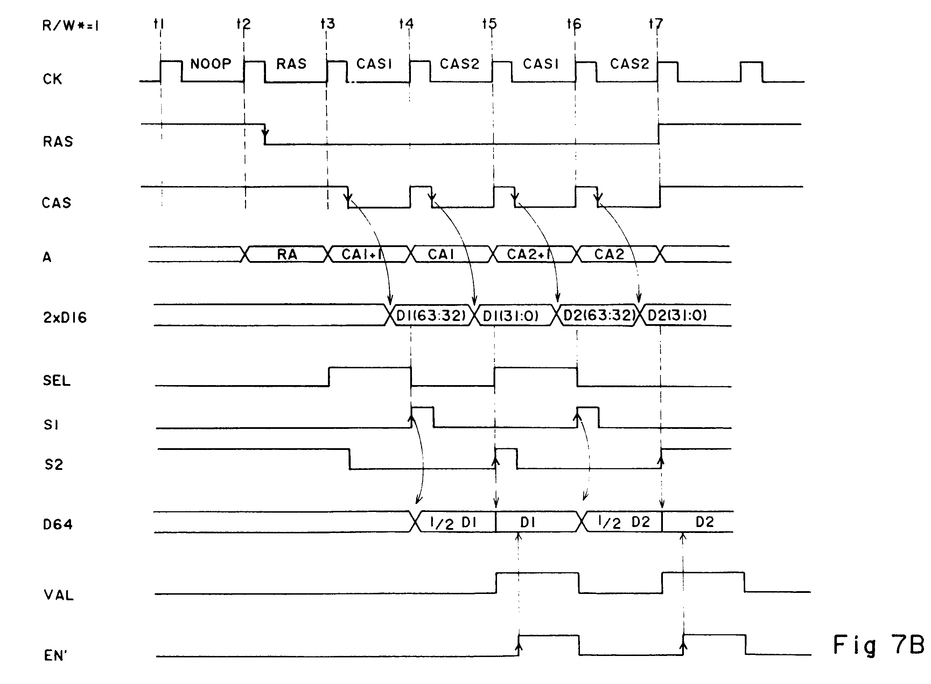

Les figures 7A et 7B illustrent respectivement un cycle d'écriture et un cycle de lecture de deux données D1 et D2 de 64 bits dans la mémoire par un bus mémoire de taille réduite (de 32 bits). Ces figures correspondent à un exemple utilisant un processeur à jeu d'instructions restreint (architecture RISC) où chaque instruction est exécutée en un cycle d'horloge.

La ligne MODE est à 0 pour indiquer que le bus mémoire est de taille réduite.

A la figure 7A, correspondant à une écriture, le signal R/W* est à 0. Des instants t1 à t7 marquent les fronts montants successifs du signal d'horloge CK. A l'instant t1, on décide d'écrire successivement les données D1 et D2 dans la mémoire. On commence par effectuer entre les instants t1 et t2 un cycle à vide NOOP nécessaire au calcul de l'adresse de page RA. Entre les instants t2 et t3, on effectue un cycle RAS, c'est-à-dire de sélection de page, pendant lequel l'adresse de page RA est présentée sur le bus d'adresses A. L'adresse RA est prise en compte par la mémoire dynamique au front descendant du signal RAS qui survient entre les instants t2 et t3.

Au front descendant du signal RAS, le signal VAL est activé juqu'à l'instant t3. L'état actif du signal VAL permet la transmission aux mémoires FIFO des signaux de validation EN' respectifs ; la mémoire FIFO validée par le signal EN' présente la donnée D1 sur le bus D64.

A l'instant t3 débute un premier cycle CAS, CAS1, et un emplacement mémoire est sélectionné par une adresse CA1+1 présentée sur le bus d'adresses A. Le signal VAL est désactivé, ce qui empêche la validation des mémoires FIFO. Le signal SEL est activé, ce qui commute le multiplexeur 62 pour présenter les bits de poids fort D1 (63:32) de la donnée D1 sur les deux bus de poids faible D16. Ces bits de poids fort D1(63:32) sont transférés dans la mémoire, à l'adresse CA1+1, au front descendant du signal CAS qui survient entre les instants t3 et t4.

A l'instant t4 débute un deuxième cycle CAS, CAS2, et une nouvelle adresse CA1 est présentée sur le bus d'adresses A. Le signal VAL est activé. Le signal SEL est désactivé, ce qui provoque la commutation du multiplexeur 62 de manière à présenter les bits de poids faible D1(31:0) de la donnée D1 sur les deux bus D16 de poids faible. Ces bits de poids faible D1(31:0) sont transférés dans la mémoire à l'adresse CA1 dès le prochain front descendant du signal CAS, avant l'instant t5. Au front descendant du signal CAS, le signal EN' est activé de nouveau grâce au fait que le signal VAL est actif, ce qui provoque la validation de la mémoire FIFO concernée qui présente une nouvelle donnée D2 sur le bus D64.

A partir de l'instant t5 se produisent deux nouveaux cycles CAS1 et CAS2 identiques aux cycles CAS précédents, pour écrire dans la mémoire successivement les bits de poids fort D2(63:32) de la donnée D2 à l'adresse CA2+1 et les bits de poids faible D2(31:0) à l'adresse CA2.

La figure 7B correspond à la lecture de deux données D1 et D2 dans la mémoire dynamique par un bus de taille moitié. Le signal R/W* est à 1 pour indiquer que l'on effectue une lecture. La ligne MODE est toujours à 0. Entre les instants t1 et t3, on effectue, comme dans la figure 7A, un cycle à vide NOOP et un cycle RAS pour sélectionner une page de la mémoire. Contrairement à la figure 7A, le signal VAL (et donc le signal EN') n'est pas activé entre les instants t2 et t3.

A l'instant t3 débute un premier cycle CAS, CAS1, avec une adresse CA1+1. Le signal SEL est activé. Quelque temps après le front descendant du signal CAS avant l'instant t4, les bits de poids fort D1(63:32) se trouvant à l'adresse CA1+1 apparaissent, présentés par la mémoire dynamique, sur les deux bus D16 de poids faible.

A l'instant t4, commence un deuxième cycle CAS, CAS2, avec une adresse CA1. Le signal SEL est désactivé, ce qui provoque l'activation de la sortie S1 de la porte 65. L'activation du signal S1 verrouille sur les lignes de poids fort du bus D64 les bits D1(63:32). Quelque temps après un nouveau front descendant du signal CAS avant l'instant t5, il apparaît sur les deux bus D16 de poids faible les bits de poids faible D1(31:0) se trouvant à l'adresse CA1.

A l'instant t5, commencent, par exemple, deux nouveaux cycles CAS1 et CAS2 de lecture d'une nouvelle donnée D2 sur le bus D64. Le signal SEL est de nouveau activé et le signal VAL est activé pour la première fois. L'activation du signal SEL provoque l'activation de la sortie S2 de la porte 64. Les bascules 24-1 verrouillent alors sur les lignes de poids faible du bus D64 les bits de poids faible D1(31:0) présents sur les deux bus D16. La donnée D1 complète, c'est-à-dire de 64 bits, est alors présente sur le bus D64. Après l'activation du signal VAL, le signal EN' correspondant à l'une des mémoires FIFO 10-1 est activé, ce qui permet à cette mémoire FIFO de prendre en compte la donnée D1 présente sur le bus D64.

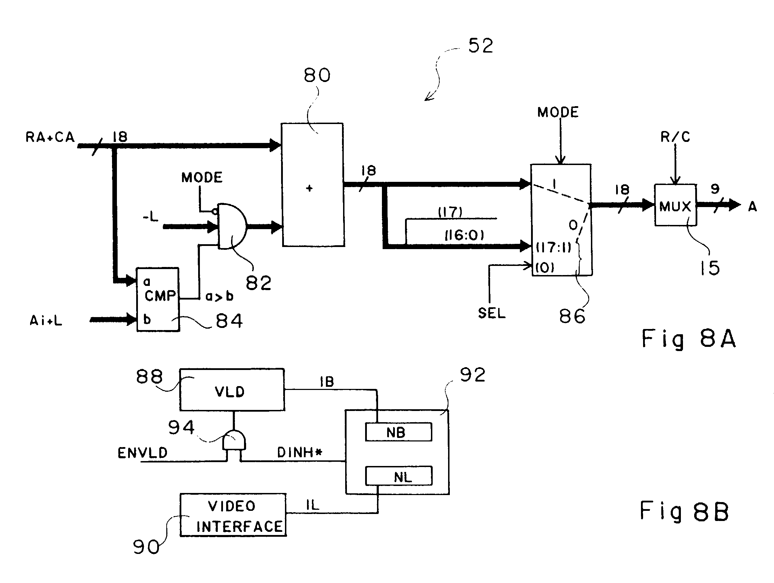

La figure 8A représente un mode de réalisation détaillé du circuit de repliement d'adresses 52. Ce circuit sert à adapter les adresses RA+CA émises par le processeur pour accéder normalement à une mémoire de 16 Mbits en des adresses servant à accéder à une mémoire de 8 Mbits organisée selon la figure 3.

Pour cela, une première fonction de ce circuit de repliement est de fournir des adresses commençant à l'adresse Ai de début du tampon d'image IB1 lorsque les adresses RA+CA fournies par le processeur 10' dépassent l'adresse Ai+L de fin du demi tampon ½IB (L étant la longueur de l'ensemble des tampons IB1 et ½IB).

Une deuxième fonction du circuit de repliement est de générer des adresses distinctes à chaque exécution d'une instruction de lecture ou écriture.

Une première partie de ce circuit comprend un additionneur 80 recevant sur une première entrée l'adresse RA+CA fournie par le processeur. Une deuxième entrée de l'additionneur 80 reçoit la valeur -L si une porte ET 82 est passante. L'une des entrées de la porte ET 82 reçoit l'inverse de la ligne MODE. Une autre entrée reçoit la sortie a>b d'un comparateur 84. Une entrée a du comparateur 84 reçoit l'adresse RA+CA et une entrée b l'adresse Ai+L. Ainsi, si la ligne MODE est à 0 (bus mémoire de taille réduite), la sortie de l'additionneur 80 vaut RA+CA si RA+CA est inférieur à Ai+L et RA+CA-L sinon.

Comme le système de décodage n'utilise que les codages intra et prédit direct, le processeur ne fournit que des adresses RA+CA correspondant à deux tampons d'image, c'est-à-dire que ces adresses ne dépassent jamais Ai+2L, contrairement au cas d'un système complet à trois tampons d'image où ces adresses atteignent Ai+3L.

Ainsi, le circuit de repliement 52 permet de générer des adresses utilisables avec une mémoire de 8 Mbits organisée selon la figure 3 alors que ces adresses sont normalement générées pour 12 Mbits dans une mémoire de 16 Mbits.

Une deuxième partie du circuit 52 comprend un multiplexeur 86 recevant sur une entrée la sortie de l'additionneur 80 et sur les bits de poids 1 à 17 d'une deuxième entrée les bits de poids 0 à 16 de la sortie de l'additionneur 80, le bit de poids 0 de cette autre entrée étant relié au signal SEL. Le multiplexeur 86 est commandé par la ligne MODE et sa sortie est reliée au multiplexeur 15 fournissant l'adresse A. Lorsque la ligne MODE est à 0 (bus mémoire de taille réduite), le multiplexeur 86 sélectionne sa deuxième entrée qui correspond, avec la configuration représentée, à la valeur de sortie de l'additionneur 80 multipliée par 2, le bit de poids le plus faible étant remplacé par la valeur du signal SEL. Le signal SEL étant à 1, dans les figures 7A et 7B, à chaque cycle CAS1 et à 0 à chaque cycle CAS2, les adresses présentées sur le bus lors des cycles CAS1 sont, comme cela est indiqué, supérieures de 1 à celles présentées lors des cycles CAS2.

Ainsi, le circuit de repliement 52 permet de générer des adresses utilisables avec un bus mémoire de taille réduite alors que ces adresses sont normalement générées pour un bus mémoire complet.

La figure 8B représente très schématiquement un mode de réalisation de circuit permettant d'empêcher qu'une image en cours de reconstruction vienne écraser une partie d'une image précédente non encore affichée.

Un décodeur MPEG comprend toujours un décodeur à longueur variable (VLD) 88 et une interface vidéo 90. Le décodeur VLD reçoit les informations codées stockées dans la zone CD de la mémoire et fournit une impulsion 1B à chaque fois que ce décodeur VLD vient de décoder des données correspondant à un bloc d'une image en cours de reconstruction. L'interface vidéo 90 reçoit les données d'une image en cours d'affichage et fournit une impulsion 1L à chaque fois qu'une ligne de l'image vient d'être affichée. Le décodeur VLD est normalement activé par un signal ENVLD.

Selon l'invention, un circuit de contrôle 92 reçoit les impulsions 1B et 1L et fournit un signal d'inhibition de décodage DINH* dont l'état actif (à 0) empêche le signal ENVLD d'atteindre le décodeur VLD, par exemple en combinant ces deux signaux à l'aide d'une porte ET 94. Le circuit de contrôle 92 comprend, par exemple, un compteur NB qui compte le nombre d'impulsions 1B (le nombre de blocs décodés) et qui est remis à 0 lorsque le nombre de blocs décodés correspond à une image entière. Un deuxième compteur NL compte le nombre d'impulsions 1L (le nombre de lignes affichées) et est remis à 0 lorsque le nombre de lignes affichées correspond à une image entière. Ci-après, les notations NB et NL désignent également les contenus respectifs des compteurs NB et NL.

Il existe deux modes d'affichage, l'un dit progressif et l'autre entrelacé. Selon le mode progressif, on affiche successivement les lignes paires et impaires et, selon le mode entrelacé, on affiche d'abord les lignes impaires et ensuite les lignes paires.

Dans la description ci-dessous, on se place dans l'exemple où les images sont de 720x480 pixels et les blocs de 16x16 pixels. Il y a ainsi 1350 blocs par image et une ligne a une largeur de 45 blocs.

Selon le mode d'affichage progressif, le tampon d'image contenant l'image à afficher se vide linéairement. Il suffit alors que le circuit de contrôle 92 active le signal d'inhibition DINH* à chaque fois que le nombre de blocs décodés NB atteint le nombre de blocs correspondant à une demi image (675) plus le nombre de blocs correspondant au nombre de lignes affichées (45 ent[NL/16], où "ent[...]" signifie "partie entière de ..."). Ainsi, DINH* est activé si

$$NB > 675 + 45 \ ent[NL/16].$$

Selon le mode entrelacé, le tampon d'image contenant l'image en cours d'affichage est d'abord vidé des lignes impaires, par exemple, et ensuite des lignes paires. Ainsi, dans une première phase tant que le nombre de lignes affichées ne correspond pas à une demi-image (NL<240), le signal DINH* est activé à chaque fois que le nombre de blocs décodés atteint le nombre de blocs correspondant à une demi-image (NB>675). Dans une deuxième phase, lorsque le nombre de lignes affichées correspond à plus d'une demi-image (NL>240), le signal DINH* est activé à chaque fois que le nombre de blocs décodés atteint le nombre de blocs correspondant à une demi-image plus le nombre de blocs correspondant aux lignes paires affichées. Pour connaître le nombre de lignes paires affichées, on retranche au nombre total de lignes affichées NL le nombre de lignes impaires dans une image (240). Ainsi, DINH* est activé dans cette deuxième phase si

$$NB > 675 + 45 \ ent[(NL-240)/8].$$

Le circuit de contrôle 92 peut être facilement réalisé par l'homme du métier à l'aide de compteurs, additionneurs et comparateurs.

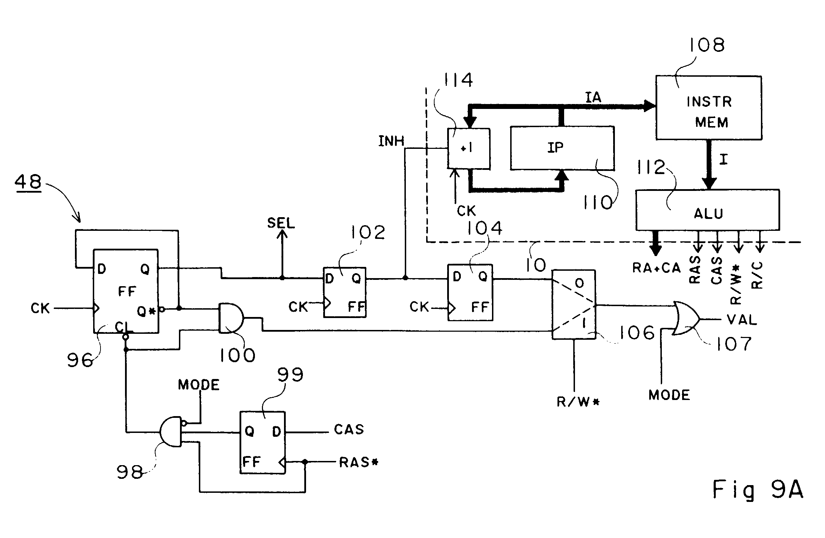

La figure 9A représente un mode de réalisation du circuit d'assistance 48. Ce circuit comprend une bascule 96 dont la sortie inversée Q* est reliée à son entrée de donnée. L'entrée d'horloge de cette bascule reçoit le signal d'horloge CK et une entrée d'effacement CL active à "0" reçoit la sortie d'une porte ET 98. Avec cette configuration, dès que l'entrée CL est désactivée (à "1"), la bascule 96 est "libérée" et se comporte en diviseur par 2 de la fréquence de l'horloge CK.

La porte 98 reçoit la sortie d'une bascule 99 et l'inverse, RAS*, du signal RAS, ainsi que l'inverse de la ligne MODE. L'entrée de donnée de la bascule 99 reçoit le signal CAS et l'entrée d'horloge le signal RAS*. Avec cette disposition, si la ligne MODE est à "0" (bus mémoire de taille réduite), la bascule 96 est libérée seulement lors d'un cycle de lecture ou d'écriture (on élimine ainsi la libération de cette bascule 96 qui aurait lieu également lors d'un cycle de rafraîchissement de la mémoire, où le signal RAS est activé aussi, mais après le signal CAS).

La sortie Q* de la bascule 96 est reliée à une première entrée d'une porte ET 100. La sortie de la porte 98 est reliée à une deuxième entrée de la porte 100. Lorsque la ligne MODE est à "0", la sortie Q de la bascule 96 fournit le signal SEL et la sortie de la porte 100 fournit le signal VAL de la figure 7A (cycles d'écriture dans la mémoire). Le signal VAL de la figure 7B (pour des cycles de lecture de la mémoire) est décalé de 3 cycles d'horloge par rapport au signal VAL de la figure 7A. Le signal SEL est décalé d'un cycle d'horloge par rapport au signal VAL de la figure 7A. Ainsi, le signal VAL de la figure 7B est obtenu en retardant le signal SEL de deux cycles d'horloge grâce à deux bascules 102 et 104 disposées en cascade à la sortie Q de la bascule 96. Le signal VAL adéquat est sélectionné par un multiplexeur 106 qui reçoit la sortie de la bascule 104 et la sortie de la porte 100 et qui est commandé par le signal R/W*. Une porte OU 107 reçoit la ligne MODE et la sortie du multiplexeur 106 afin que le signal VAL soit toujours actif lorsque le bus mémoire complet est utilisé.

On a aussi représenté en figure 9A certains des éléments d'un processeur classique qui traite les instructions d'écriture ou de lecture de la mémoire. Ce processeur comprend une mémoire d'instructions 108 contenant un programme normalement destiné à un système de décodage MPEG muni d'une mémoire de 16 Mbits. Un pointeur d'instruction 110 fournit l'adresse IA de l'instruction I couramment exécutée. L'instruction I est fournie par la mémoire 108 à une unité de traitement (ALU) 112 qui génère l'adresse RA+CA et les signaux RAS, CAS, R/W* et R/C. Le pointeur d'instruction 110 est incrémenté à chaque cycle d'horloge par un additionneur 114. Ainsi, à chaque cycle d'horloge CK, une nouvelle instruction à exécuter dans l'unité 112 est cherchée dans la mémoire 108.

Selon un mode de réalisation de l'invention, l'additionneur 114 est inhibé par un signal INH fourni par la sortie de la bascule 102. Ce signal INH est actif pendant chacun des cycles CAS2 des figures 7A et 7B. Ainsi, après chaque exécution d'une première instruction de lecture ou écriture (CAS1), l'incrémentation du pointeur d'instruction est empêchée au cycle d'horloge suivant, ce qui entraîne que c'est toujours la même instruction de lecture ou écriture qui est exécutée au cycle suivant. Bien entendu, la deuxième fois que cette instruction est exécutée, l'adresse RA+CA n'est normalement pas modifiée. C'est le circuit de repliement 52 qui se charge de générer des adresses distinctes à chacune des deux exécutions de la même instruction de lecture ou écriture.

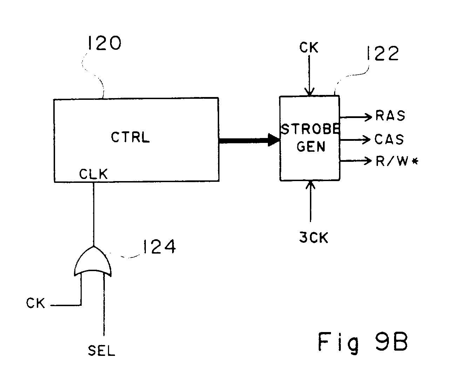

La figure 9B représente une autre architecture de processeur permettant une modification particulièrement simple pour réaliser les deux exécutions de chaque instruction de lecture ou d'écriture. Ce processeur comprend une unité de commande 120 qui inclut le pointeur d'instruction 110, la mémoire d'instructions 108, l'additionneur 114, ainsi qu'une partie de l'unité de traitement 112 de la figure 9A. Les signaux RAS, CAS et R/W* sont générés par un module 122 à partir du signal d'hologe CK, un signal d'horloge 3CK de fréquence triple, et d'une commande fournie par l'unité 120. Cette commande correspond directement à une instruction chargée pour exécution dans l'unité 120.

Normalement, l'unité de commande 120 reçoit le signal d'horloge CK sur une entrée CLK. Selon un mode de réalisation de l'invention, une porte OU 124 recevant les signaux CK et SEL est disposée à l'entrée d'horloge CLK de l'unité 120. Avec cette configuration, l'unité de commande 120 est "figée" à chaque fois que le signal SEL est actif, alors que les signaux RAS et CAS poursuivent leur évolution normale. Si une instruction de lecture ou d'écriture est chargée dans l'unité 120, cette instruction n'est pas remplacée par la suivante tant que le signal SEL est actif (pendant chacun des premiers cycles CAS des figures 7A et 7B). Or, comme le module 122 reçoit des signaux d'horloge CK, 3CK non modifiés, les actions de ce module 122 sont répétées à chaque cycle d'horloge tant que l'instruction chargée demeure.

Ce mode de réalisation est particulièrement simple à mettre en oeuvre car l'entrée d'horloge de l'unité 120, devant laquelle il faut placer la porte OU 124, est facilement accessible.

On a décrit ci-dessus des modes de réalisation avantageux de l'invention permettant, par des modifications simples d'une architecture classique, d'utiliser un unique programme de transfert de données, indépendamment du fait que l'architecture est utilisée avec un bus mémoire complet ou avec un bus mémoire réduit. Bien entendu, il est aussi possible, si l'on ne souhaite pas utiliser un circuit de repliement 52 et une inhibition du pointeur d'instruction 110 ou de l'horloge CK, de prévoir deux programmes distincts selon que l'architecture est utilisée avec un bus mémoire complet ou avec un bus mémoire réduit.

L'exemple de fonctionnement décrit en relation avec les figures 7A et 7B correspond à un processeur à architecture RISC, c'est-à-dire que chaque cycle d'horloge correspond à l'exécution d'une instruction. Une telle architecture permet d'effectuer plusieurs cycles CAS successifs derrière un cycle RAS. Dans une architecture à jeu d'instructions complexe (CISC), une instruction de lecture ou d'écriture correspond au moins à l'ensemble des cycles NOOP, RAS et CAS. Lorsqu'une instruction de lecture ou d'écriture est à exécuter deux fois dans une telle architecture, on exécute deux fois la succession de cycles NOOP, RAS et CAS. L'homme du métier saura déterminer les allures des signaux VAL, INH et SEL correspondants et générer ces signaux. Pour cela, par exemple, on fournit au circuit de la figure 9 des impulsions CK qui correspondent à des cycles d'instruction et non à des cycles d'horloge.

Les circuits des figures 6, 8A, 8B, 9A, et 9B sont donnés à titre d'exemple. Il est évident pour l'homme du métier, à l'aide des fonctions décrites de ces circuits, de les réaliser de nombreuses manières différentes.

La présente invention a été décrite dans le cadre d'un décodeur MPEG, mais on notera qu'elle se généralise à tout système à processeur possédant un bus système de taille fixe et un bus mémoire de taille variable, la taille de la mémoire n'entrant pas en compte.

En effet, en supposant que la taille du bus mémoire est de $n=2^p$ et que celle du bus système est de $N=2^P$, au lieu d'utiliser une seule ligne MODE et un seul signal SEL, on utilise plusieurs lignes MODE et plusieurs lignes SEL.

Dans le mode de réalisation de la figure 9A, le signal INH permettant d'inhiber l'incrémentation du compteur d'instruction IP reste actif pendant $(N/n)-1$ cycles de lecture ou d'écriture de manière qu'une même instruction de lecture ou d'écriture soit exécutée N/n fois.

Les adresses RA+CA fournies par le processeur sont multipliées par N/n dans le circuit de repliement et les bits de poids le plus faible de ces adresses sont remplacés par les états des lignes SEL, de manière à utiliser une adresse différente à chaque exécution d'une même instruction de lecture ou d'écriture.

Le circuit d'interface entre le bus système et le bus mémoire comprend, selon un mode de réalisation, deux registres de décalage, l'un pour l'écriture en mémoire, l'autre pour la lecture.

Le registre de décalage d'écriture reçoit les N lignes du bus système (D64) et fournit les N lignes du bus mémoire (les 4 bus D16). Ce registre de décalage est programmable par le bus MODE pour effectuer un décalage à droite de n bits à chaque cycle d'horloge. On présente ainsi sur les lignes utiles (de poids faible) du bus mémoire les N/n sous-mots successifs de n bits du mot présent sur le bus système.

Le registre de décalage de lecture reçoit les N lignes du bus mémoire et fournit les N lignes du bus système. Il est programmable par le bus MODE pour effectuer un décalage à gauche de n bits à chaque cycle d'horloge. Ainsi, au bout de N/n cycles, le registre de décalage contient le mot de N bits à lire. Les lectures des sous-mots doivent être effectuées dans l'ordre inverse de leurs écritures.

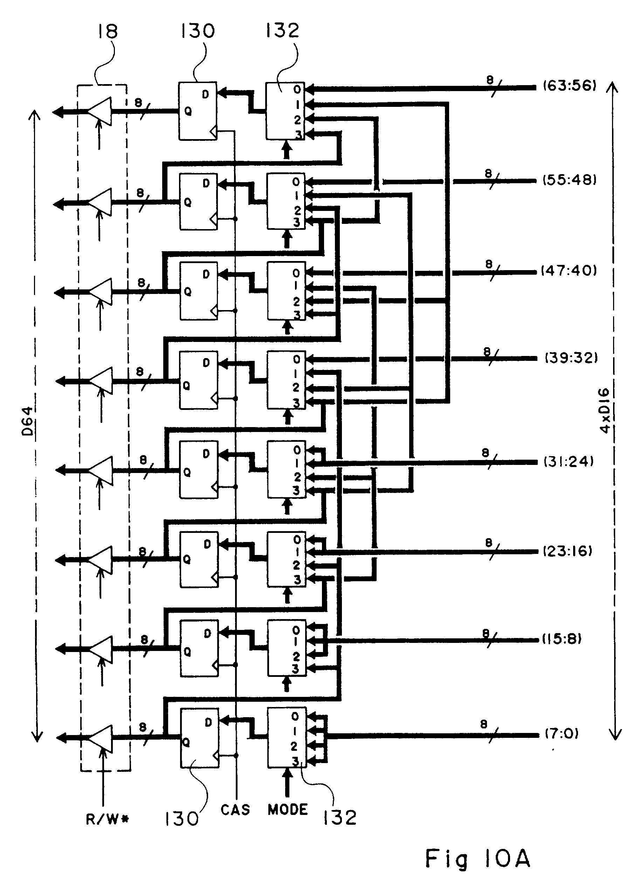

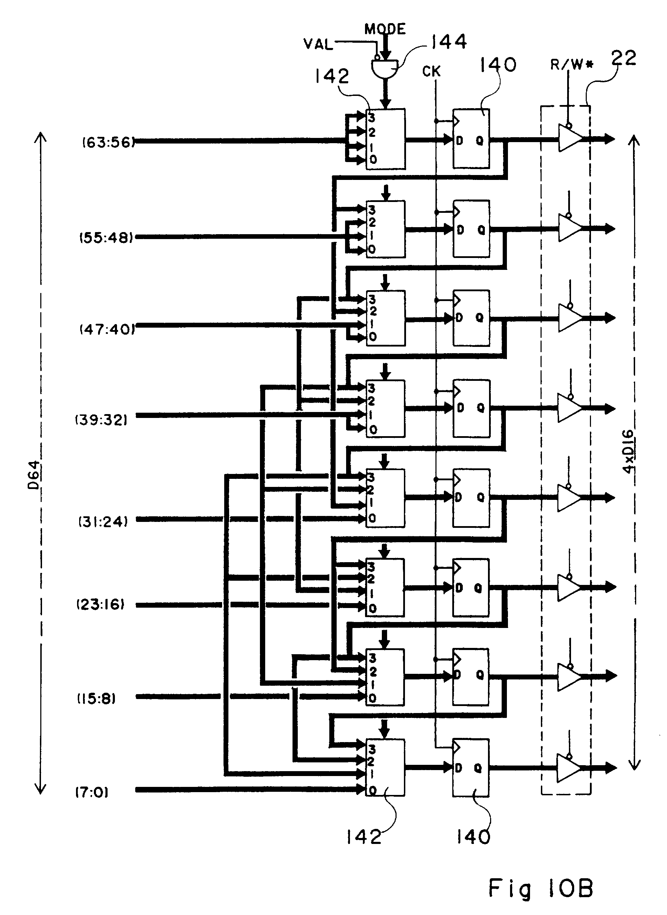

Les figures 10A et 10B montrent une telle interface à registres de décalage dans l'exemple où le bus système, D64, est de 64 lignes et où le bus mémoire est d'une taille qui peut-être sélectionnée parmi 64, 32, 16 et 8 lignes. Pour sélectionner ces quatres possibilités, on utilise un bus MODE de deux lignes.

Le tableau ci-dessous résume les choix des tailles du bus mémoire en fonction des valeurs présentées sur le bus MODE.

| MODE(1:0) | TAILLE DU BUS MEMOIRE |
|-----------|-----------------------|
| 00        | 64 bits               |
| 01        | 32 bits               |
| 10        | 16 bits               |
| 11        | 8 bits                |

La figure 10A représente un mode de réalisation de registre de décalage de lecture dans la mémoire. Ce registre de décalage comprend 8 bascules de 8 bits 130. Comme pour les bascules 24 de la figure 2, les sorties des bascules 130 sont reliées au bus D64 par l'intermédiaire d'un ensemble de portes trois états 18, et les entrées d'horloge de ces bascules 130 reçoivent le signal CAS.

L'entrée de donnée de chaque bascule 130 est reliée à la sortie d'un multiplexeur 4 en 1 respectif 132. Les multiplexeurs 132 sont commandés par le bus MODE. L'entrée couramment sélectionnée d'un multiplexeur 132 est marquée par la valeur, en décimal (0,1,2,3), présente sur le bus MODE. Les entrées O des 8 multiplexeurs 132 reçoivent respectivement les 8 ensembles de 8 lignes du bus mémoire 4xD16.

Un élément dit de rang i ci-après, est l'élément associé aux lignes de poids i-1 à i+6 du bus mémoire ou système.

Les bascules 130 et les multiplexeurs 132 sont reliés entre eux de la manière récursive suivante : la sortie d'une bascule 130 de rang i est reliée à l'entrée 3 du multiplexeur de rang i+1, à l'entrée 2 du multiplexeur de rang i+2 et à l'entrée 1 du multiplexeur de rang i+4. Toutes les entrées du multiplexeur de rang 1 sont reliées ensemble, les entrées 0 à 2 du multiplexeur de rang 2 sont reliées ensemble, et les entrées 0 et 1 des multiplexeurs de rangs 3 et 4 sont reliées ensemble. Bien entendu, le multiplexeur de rang 1 peut être supprimé, mais il est représenté pour montrer la régularité des connexions.

Avec cette configuration, on réalise un registre de décalage à gauche de 0, 8, 16 ou 32 bits selon la valeur présente sur le bus MODE.

La figure 10B représente un mode de réalisation de registre de décalage d'écriture dans la mémoire. Ce registre comprend 8 bascules de 8 bits 140 associées respectivement aux 8 ensembles de 8 lignes du bus D64. Comme les bascules 20 de la figure 2, les sorties des bascules 140 sont reliées aux lignes du bus mémoire 4xD16 par l'intermédiaire d'un ensemble de portes trois états 22, et les entrées d'horloge de ces bascules 140 reçoivent le signal d'horloge CK.

L'entrée de donnée de chaque bascule 140 est reliée à la sortie d'un multiplexeur 4 en 1 respectif 142. Les multiplexeurs 142 sont commandés par le bus MODE par l'intermédiaire d'une porte ET 144 recevant également l'inverse du signal VAL. Avec cette configuration, lorsque le signal VAL est actif (à 1) l'entrée 0 de chaque multiplexeur 142 est sélectionnée, quel que soit l'état du bus MODE. Lorsque le signal VAL est inactif, l'entrée correspondant à la valeur du bus MODE est sélectionnée dans chaque multiplexeur.

Les multiplexeurs 142 et les bascules 140 sont reliés entre eux de manière identique à ceux de la figure 10A, sauf que les rangs associés à chaque couple multiplexeur/bascule sont inversés par rapport à ceux de la figure 10A.

Avec cette configuration, on réalise un registre de décalage à droite de 0, 8, 16 ou 32 bits selon la valeur présente sur le bus MODE. En outre, toutes les entrées 0 des multiplexeurs 142 sont sélectionnées lorsque le signal VAL est actif, ce qui sert à stocker dans les bascules 140 la donnée de 64 bits présentée sur le bus D64 au début d'une phase d'écriture dans la mémoire.

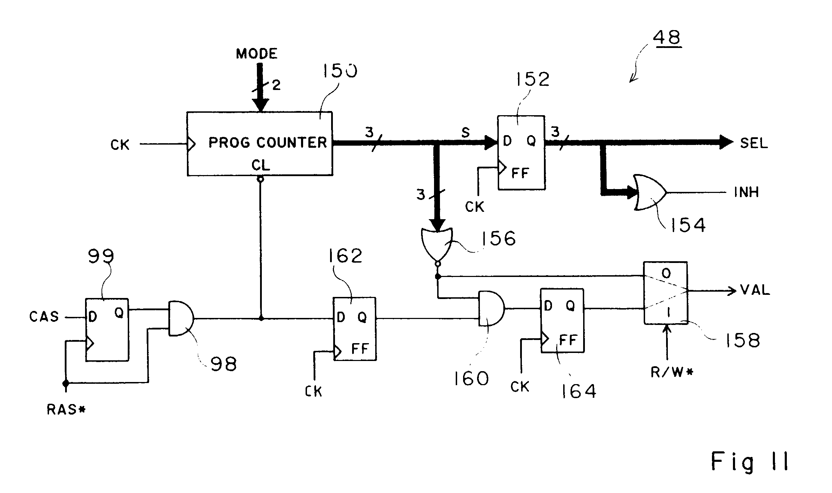

La figure 11 représente un mode de réalisation de circuit d'assistance 48 destiné à générer les divers signaux du système susmentionné où le bus mémoire peut prendre quatre tailles différentes. Dans cette figure, on retrouve la porte ET 98 et la bascule 99 de la figure 9A, connectées de la même manière sauf que la porte ET 98 ne reçoit pas de ligne MODE. La sortie de la porte 98 est reliée à une entrée inversée de mise à O d'un compteur programmable 150, de manière que le compteur 150, ne soit libéré que lorsque le signal RAS est actif (à 0) lors d'un cycle de lecture ou d'écriture.

Le compteur 150 est cadencé par le signal d'horloge CK et est programmable par le bus MODE pour rester à 0, ou bien compter jusqu'à 2, 4 ou 8 selon la valeur présente sur le bus MODE. La sortie S (de 3 bits) de ce compteur est retardée d'un cycle d'horloge par une bascule 152 avant d'être fournie à trois lignes d'un bus SEL. Avec cette disposition, la valeur présente sur le bus SEL vaut 0 lors d'un premier cycle CAS et est incrémentée à chaque cycle CAS suivant d'une exécution répétée d'une même instruction de lecture ou d'écriture. Le signal INH mentionné en relation avec la figure 9A est obtenu à la sortie d'une porte OU 154 recevant les trois lignes du bus SEL. Ainsi, le signal INH est actif (c'est-à-dire qu'il empêche une nouvelle instruction d'être chargée dans le processeur) pendant chaque cycle CAS, sauf le premier, d'une exécution répétée d'une même instruction de lecture ou d'écriture. Dans le cas de la figure 9B, les lignes du bus SEL sont toutes fournies à la porte OU 124.

Les trois lignes S sont également fournies à une porte NON OU 156. La sortie de cette porte est à 1 pendant le cycle d'horloge précédant chaque premier cycle CAS d'une exécution répétée d'une instruction de lecture ou d'écriture. La sortie de la porte 156 correspond donc au signal VAL à fournir lors d'une écriture dans la mémoire. Ce signal VAL est sélectionné par une première position d'un multiplexeur 158 commandé par la ligne R/W*.

La sortie de la porte 156 est également fournie à une première entrée d'une porte ET 160 dont une deuxième entrée reçoit la sortie de la porte 98 retardée d'un cycle d'horloge par une bascule 162. La sortie de la porte 160 est retardée d'un cycle d'horloge par une bascule 164. La sortie de la bascule 164 est ainsi à 1 pendant le cycle d'horloge suivant le dernier cycle CAS d'une exécution répétée d'une même instruction de lecture ou d'écriture. La sortie de la bascule 164 correspond donc au signal VAL à fournir lors d'une lecture dans la mémoire et elle est fournie à une deuxième entrée du multiplexeur 158.

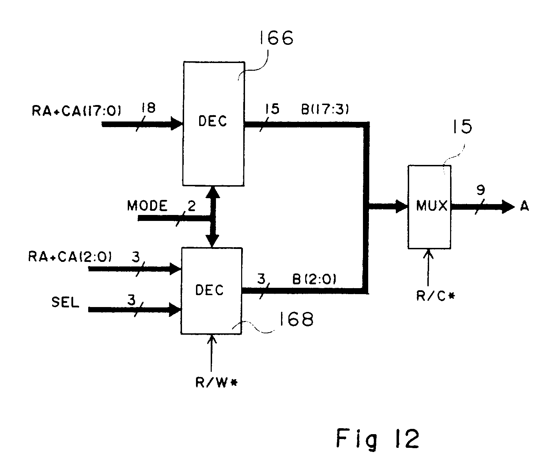

La figure 12 représente un mode de réalisation de circuit de modification des adresses A à fournir à la mémoire lors des exécutions répétées d'une même instruction de lecture ou d'écriture. Les 18 bits (17:0) de l'adresse RA+CA générée par le processeur sont fournis à l'entrée d'un premier décodeur 166. Le décodeur 166 fournit les 15 bits de poids fort (17:3) d'une adresse B de 18 bits fournie au multiplexeur 15 précédemment mentionné. Un deuxième décodeur 168 reçoit les trois bits de poids faible (2:0) de l'adresse RA+CA, les trois lignes SEL et la ligne R/W*. Le décodeur 168 fournit les trois bits de poids faible (2:0) de l'adresse B. Chacun des décodeurs 166 et 168 reçoit également les deux lignes du bus MODE. Le tableau ci-dessous montre les valeurs des sorties des décodeurs 166 et 168 en fonction des valeurs du bus MODE.

| MODE | B(17:3) | B(2:0), R/W*=0 | B(2:0), R/W*=1 |
|------|---------|----------------|----------------|
| 00 | RA+CA(17:3) | RA+CA(2:0) | |
| 01 | RA+CA(16:2) | RA+CA(1:0):SEL*(0) | RA+CA(1:0):SEL(0) |
| 10 | RA+CA(15:1) | RA+CA(0):SEL*(1:0) | RA+CA(0):SEL(1:0) |
| 11 | RA+CA(14:0) | SEL*(2:0) | SEL(2:0) |

Dans ce tableau, la notation RA+CA(0):SEL*(1:0), par exemple, dans la troisième colonne signifie que les trois bits de poids faible (2:0) de l'adresse B sont égaux, par ordre de poids décroissants, au bit de poids faible de l'adresse RA+CA et aux deux bits de poids faible, inversés, du bus SEL.

On notera, dans le tableau ci-dessus, que lorsque la ligne R/W* est à 0 (écriture dans la mémoire) on utilise l'inverse des lignes SEL alors qu'on utilise directement les lignes SEL lorsque la ligne R/W* est à 1 (lecture dans la mémoire). Avec cette configuration, les sous-mots d'un mot de 64 bits écrits dans la mémoire par un bus mémoire de taille réduite sont relus dans l'ordre inverse de leur écriture, ce qui est nécessaire, comme on l'a précédemment indiqué, si l'on utilise une interface à registres de décalage.

**Revendications**

1. Système de traitement d'images comprenant un processeur (10) adapté pour traiter des images selon des modes intra, prédit et bidirectionnel, en coopération avec une mémoire (12) capable de stocker au moins trois images décodées et accessible par un bus de données de N bits, caractérisé en ce qu'il comprend, pour traiter des images seulement selon les modes intra et prédit en coopération avec une mémoire de taille moitié par un bus de N/2 bits :

   - des moyens (62) pour, à chaque exécution par le processeur d'une instruction d'écriture d'un mot de N bits dans la mémoire, écrire successivement chaque sous-mot de N/2 bits de ce mot de N bits ;
   - des moyens (60, 64, 65, 66) pour, à chaque exécution d'une instruction de lecture d'un mot de N bits dans la mémoire, lire successivement dans ladite mémoire deux sous-mots de N/2 bits, et juxtaposer ces sous-mots sur le bus de N bits ;
   - un circuit de repliement d'adresse (52) comprenant :

     - un circuit d'adressage (86) pour fournir à la mémoire deux adresses distinctes pour chaque adresse fournie par le processeur ;
     - un circuit de génération d'adresse (80-84) pour fournir une adresse comprise entre les frontières d'adressage de la mémoire quand une adresse fournie par le circuit d'adressage est en dehors de frontières prédéterminées ; et

   - des moyens (92, 94) pour inhiber le décodage si une adresse fournie à la mémoire en écriture correspond à une donnée non encore lue.

2. Système selon la revendication 1, caractérisé en ce qu'il comprend des moyens (114, 102, 124) pour verrouiller chaque instruction de lecture ou d'écriture dans le processeur, de manière que chaque instruction de lecture ou d'écriture soit exécutée deux fois.

3. Système selon la revendication 2, caractérisé en ce que lesdits moyens pour verrouiller comprennent des moyens (114, 102) pour inhiber l'incrémentation d'un pointeur d'instruction (110) du processeur.

4. Système selon la revendication 2, caractérisé en ce que lesdits moyens pour verrouiller comprennent des moyens (124) pour inhiber la fourniture d'un signal d'horloge (CK) au processeur.

5. Système selon la revendication 2, caractérisé en ce que le circuit d'adressage (86) comprend des moyens pour multiplier par deux chaque adresse fournie par le processeur et incrémenter ou décrémenter l'adresse résultante après l'exécution de la première de deux mêmes instructions de lecture ou d'écriture.

6. Système selon la revendication 2, comprenant des dispositifs (10-1) connectés pour recevoir des données de N bits sur le bus de N bits (D64) par l'activation de signaux de validation respectifs (EN) dont chacun est normalement activé à chaque exécution d'une instruction de lecture, caractérisé en ce qu'il comprend des moyens (50, VAL) pour autoriser l'activation desdits signaux de validation seulement à l'exécution de la deuxième de deux mêmes instructions de lecture.

7. Système selon la revendication 2, comprenant des dispositifs (10-1) connectés pour écrire des données de N bits sur le bus de N bits (D64) par l'activation de signaux de validation respectifs (EN) dont chacun est normalement activé à chaque exécution d'une instruction d'écriture, caractérisé en ce qu'il comprend des moyens (50, VAL) pour autoriser l'activation desdits signaux de validation seulement à l'exécution de la première de deux mêmes instructions d'écriture.

**Patentansprüche**

1. System zur Bildbearbeitung mit einem Prozessor (10), der zur Bildbearbeitung nach einem Intra-, Vorhersage- und Bidirektional-Modus in Zusammenarbeit mit einem Speicher (12) ausgelegt ist, welcher zumindest drei decodierte Bilder speichern kann und auf den über einen Datenbus von N-Bits zugreifbar ist, dadurch gekennzeichnet, dass es zur Bildbearbeitung lediglich nach dem Intra- und Vorhersage-Modus in Zusammenarbeit mit einem Speicher halber Größe über einen Bus von N/2-Bits aufweist:

   - Einrichtungen (62), um bei jeder Ausführung eines Schreibbefehles durch den Prozessor für ein Wort von N-Bits in den Speicher, aufeinander folgend jedes Unterwort von N/2-Bits des Wortes von N-Bits zu schreiben;
   - Einrichtungen (60, 64, 65, 66), um bei jeder Ausführung eines Lesebefehles für ein Wort von N-Bits in dem Speicher aufeinander folgend in diesem Speicher zwei Unterworte von N/2-Bits zu lesen und diese Unterworte auf den Bus von N-Bits nebeneinander zu stellen;
   - eine Schaltung (52) zum Falten der Adresse mit:

      - einer Adressierungsschaltung (86), um für jede von dem Prozessor gelieferte Adresse an den Speicher zwei unterschiedliche Adressen zu liefern;
      - einer Adressenerzeugungsschaltung (80 bis 84), um eine Adresse innerhalb der Adressierungsgrenzen des Speichers zu liefern, wenn eine von der Adressierungsschaltung gelieferte Adresse außerhalb der vorbestimmten Grenzen ist; und

   - Einrichtungen (92, 94), um die Decodierung zu verhindern, wenn eine an den Speicher beim Einschreiben gelieferte Adresse noch nicht gelesenen Daten entspricht.

2. System nach Anspruch 1, dadurch gekennzeichnet, dass es Einrichtungen (114, 102, 124) aufweist, um jeden Lese- oder Schreibbefehl in dem Prozessor zu verriegeln, derart, dass jeder Lese- oder Schreibbefehl zweimal ausgeführt wird.

3. System nach Anspruch 2, dadurch gekennzeichnet, dass die Verriegelungseinrichtungen Einrichtungen (114, 102) aufweisen, um das Inkrementieren eines Befehlzeigers (110) des Prozessors zu verhindern.

4. System nach Anspruch 2, dadurch gekennzeichnet, dass die Verriegelungseinrichtungen Einrichtungen (124) aufweisen, um das Liefern eines Taktsignales (CK) an den Prozessor zu verhindern.

5. System nach Anspruch 2, dadurch gekennzeichnet, dass die Adressierungsschaltung (86) Einrichtungen enthält, um jede von dem Prozessor gelieferte Adresse mit ZWEI zu multiplizieren und die resultierende Adresse nach der Ausführung des ersten von zwei gleichen Lese- oder Schreibbefehlen zu inkrementieren oder zu dekrementieren.

6. System nach Anspruch 2, mit verbundenen Schaltungseinrichtungen (10-1), um Daten von N-Bits über den Bus mit N-Bits (D64) durch die Aktivierung von entsprechenden Freigabesignalen (EN) zu erhalten, von denen jedes normalerweise bei jeder Ausführung eines Lesebefehles aktiviert wird, dadurch gekennzeichnet, dass es Einrichtungen (50, VAL) aufweist, um die Aktivierung der Freigabesignale lediglich bei der Ausführung des zweiten von zwei gleichen Lesebefehlen zu autorisieren.

7. System nach Anspruch 2, mit verbundenen Schaltungseinrichtungen (10-1), um Daten von N-Bits auf den Bus mit N-Bits (D64) durch die Aktivierung von entsprechenden Freigabesignalen (EN) zu schreiben, von denen jedes normalerweise bei jeder Ausführung eines Schreibbefehles aktiviert wird, dadurch gekennzeichnet, dass es Einrichtungen (50, VAL) aufweist, um die Aktivierung der Freigabesignale nur bei der Ausführung des ersten von zwei gleichen Schreibbefehlen zu autorisieren.

**Claims**

1. An image processing system including a processor (10) adapted to processing pictures according to intra, predicted and bidirectional modes in cooperation with a memory (12) capable of storing at least three decoded pictures and accessible through an N-bit data bus, characterized in that it comprises, for processing pictures only according to the intra and predicted modes in cooperation with a half-size memory through an N/2-bit bus:

- means (62) for, at each execution by the processor of a write instruction of one N-bit word in the memory, successively writing each N/2-bit sub-word constituting said N-bit word;
- means (60, 64, 65, 66) for, at each execution of a read instruction of an N/bit word in the memory, successively reading in said memory two N/2-bit sub-words, and juxtaposing these sub-words on the N-bit bus;
- an address folding circuit (52) comprising:

  • an addressing circuit (86) for providing the memory with two distinct addresses for each address provided by the processor;
  • an address generating circuit (80-84) for providing an address within the address boundaries of the memory when an address provided by the addressing circuit is out of predetermined boundaries; and

- means (92, 94) for inhibiting the decoding if an address provided to the memory in write mode corresponds to data which has not yet been read.

2. The system of claim 1, including means (114, 102, 124) for locking each read or write instruction in the processor so that a same read or write instruction is executed twice.

3. The system of claim 2, wherein said locking means include means (114, 102) for inhibiting the incrementation of an instruction pointer (110) of the processor.

4. The system of claim 2, wherein said locking means include means (124) for inhibiting the provision of a clock signal (CK) to the processor.

5. The system of claim 2, including means (86) for multiplying by 2 each address provided by the processor and for incrementing or decrementing the resulting address at each execution of the first of two same read or write instructions.

6. The system of claim 2, including devices (10-1) that are connected in order to receive N-bits data on the fixed size bus (D64) through the activation of respective enabling signals (EN), each signal being normally activated at each execution of a read instruction, characterized in that it includes means (50, VAL) for authorizing the activation of said enabling signals only during the execution of the second of the two same read instructions.

7. The system of claim 2, including devices (10-1) that are connected to write N-bits data on the N-bit bus (D64) through the activation of respective enabling signals (EN), each signal being normally enabled each time a write instruction is executed, characterized in that it includes means (50, VAL) for authorizing the activation of said enabling signals only during the execution of the first of two same write instructions.

| CD | PD 0.7 Mbit | IB1 | IB2 | IB3 |
|---|---|---|---|---|
| 3.3 Mbit | | 4 Mbit | 4 Mbit | 4 Mbit |

Fig IA

Fig IB

Fig 2

Fig 3

Fig 4A

Fig 4B

Fig 5

Fig 6

EP 0 632 388 B1

MODE=O
R/W*=O

| | t1 | | t2 | | t3 | | t4 | | t5 | | t6 | | t7 |

NOOP    RAS    CAS1    CAS2    CAS1    CAS2

CK

RAS

CAS

A    RA    CA1+1    CA1    CA2+1    CA2

VAL

EN'

D64    D1    D2

SEL

2xD16    D1(63:32)    D1(31:0)    D2(63:32)    D2(31:0)

Fig 7A

Fig 7B

Fig 8A

Fig 8B

Fig 9A

Fig 9B

Fig 10A

Fig 10B

Fig 11

Fig 12